# EUROPEAN PATENT SPECIFICATION

(11) **EP 2 496 760 B1**
(45) Date of publication and mention of the grant of the patent: **27.01.2016**
(21) Application number: 10827961.3
(22) Date of filing: 03.11.2010
(51) Int. Cl.: F04C 19/00, F04D 27/02, D21F 1/48, D21F 5/14, F04D 25/16, F04D 17/16

(54) **VACUUM SYSTEM FOR A FIBER WEB MACHINE AND METHOD IN THE VACUUM SYSTEM OF A FIBER WEB MACHINE**
VAKUUMSYSTEM FÜR EINE FASERVLIESMASCHINE UND VERFAHREN ZUR ANWENDUNG IN DEM VAKUUMSYSTEM FÜR EINE FASERVLIESMASCHINE
INSTALLATION SOUS VIDE POUR MACHINE À BANDE FIBREUSE ET PROCÉDÉ UTILISÉ DANS L'INSTALLATION SOUS VIDE D'UNE MACHINE À BANDE FIBREUSE

(30) Priority: 06.11.2009 FI 20096155
(43) Date of publication of application: 12.09.2012
(73) Proprietor: Valmet Technologies, Inc., 02150 Espoo (FI)
(72) Inventor: KOKKONEN, Kari, FI-40520 Jyväskylä (FI); HIIPAKKA, Hanna, FI-40520 Jyväskylä (FI)
(74) Representative: TBK
(86) International application number: PCT/FI2010/050886
(87) International publication number: WO 2011/055016

(56) References cited:
- WO-A1-96/15319
- WO-A1-2004/065688
- DE-A1- 10 162 133
- GB-A- 2 129 026
- US-A- 4 398 996
- US-A- 5 535 527
- US-A- 5 535 527

## Description

The invention relates to a vacuum system for a fiber web machine, the vacuum system comprising
- several vacuum devices each of which is provided with a motor, and
- negative pressure lines for leading a vacuum from the vacuum devices to applications.

The invention also relates to a method in a vacuum system of a fiber web machine.

Vacuum technology is used abundantly in a fiber web machine mainly for removing water and controlling the web. For example, felt suction boxes are used to recondition a press felt in the press section while simultaneously removing water. In addition, suction rolls are used. A vacuum is typically created with a vacuum device, such as a liquid ring pump. The negative pressure levels that are generally used range from 25 to 55 kPa, exceeding 60 kPa in some applications. Furthermore, the flow rates required are so high that almost each application requires a vacuum device of its own. In practice, the applications are located at different heights relative to each other whereas the vacuum devices must be placed in the basement of a fiber web machine. Therefore, the necessary negative pressure lines are provided between the vacuum devices and the applications.

However, the efficiency ratios of known vacuum systems are low and their adjustability is poor. Vacuum devices must be dimensioned according to the maximum requirement although the vacuum requirement may change during use. Moreover, the operating range of a vacuum device is limited. In other words, a specific air volume corresponds to a specific negative pressure level. However, a flow rate lower than the maximum is often needed for a vacuum device, in which case so called vacuum release control is used or even almost complete flow contraction. In the vacuum release control, a flow connection for supplying machine hall air is opened on the suction side of the vacuum device. Then, in the worst case, the efficiency of the vacuum system remains as low as below thirty, which, on the other hand, means a significant energy loss. In practice, a vacuum system is in fact a mill's second largest energy consumer after the fiber web machine. On the other hand, the need of adjustment also increases due to the differences between the press felts and their changing properties during use. Furthermore, in fiber web machines, the tendency is towards using nip dewatering, wherein less water than before is drawn from the press felt. In practice, the capacity of a vacuum system can then reduce to a third or even to a fourth of the maximum capacity, which is a remarkable problem particularly in the existing fiber web machines.

A vacuum system with the features of the preamble of claim 1 and a method for the condition monitoring of an application with the features of the preamble of claim 6 are known from document US 4 398 996 A. Further relevant background art is disclosed in document DE 101 62 133 A1.

The object of the invention is to provide a novel vacuum system for a fiber web machine whose efficiency remains high regardless of changes in the vacuum requirement. The characteristic features of the vacuum system of this invention are listed in the characterising portion of claim 1. With such a combination, the vacuum devices can be adjusted to each vacuum requirement in an energy-efficient way. At the same time, it is possible to abandon the vacuum release control that was used earlier. Another object of the invention is to provide a novel method for a fiber web machine with which method more extensive adjustability is achieved than before. The characteristic features of the method according to this invention are listed in the characterising portion of claim 7. In addition, the method can be extended to the condition monitoring of the applications and thus even to the estimation of operating time.

The invention is described below in detail by making reference to the enclosed drawings which illustrate some of the embodiments of the invention, in which
- Figure 1: shows a vacuum system according to prior art adapted to the press section of a fiber web machine,
- Figure 2: is a basic drawing of the first embodiment of the vacuum system according to the invention,
- Figure 3: is a basic drawing of the second embodiment of the vacuum system according to the invention,
- Figure 4: illustrates the efficiency of a vacuum system according to prior art and the vacuum system according to the invention as a function of the air volume,
- Figure 5: is a variation of the first embodiment of the system according to the invention.

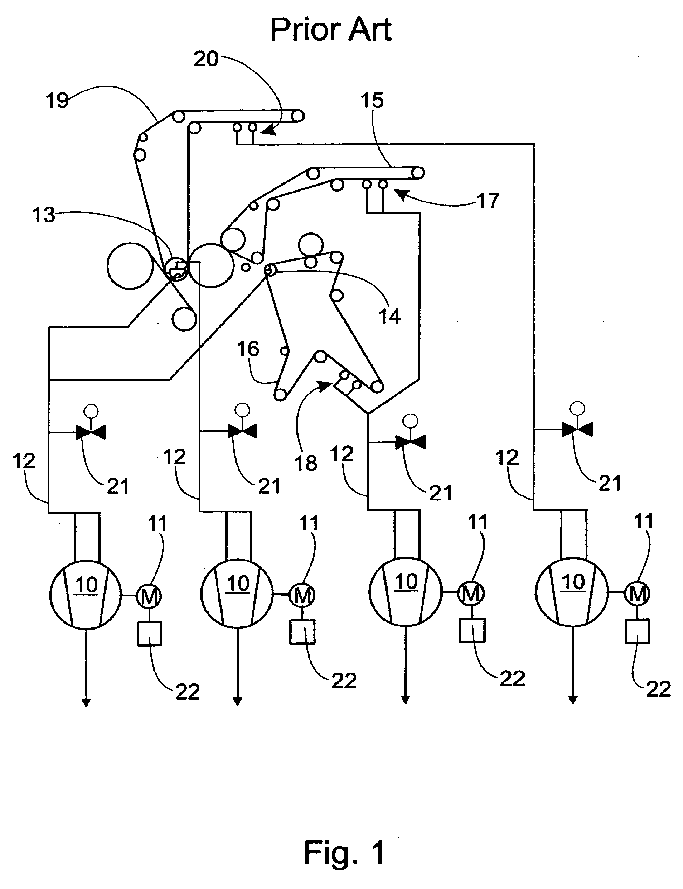

Figure 1 shows the principle of the press section of a fiber web machine known as such and particularly the vacuum system of the press section. Vacuum systems exist in other locations of a fiber web machine as well, such as in the forming and dryer sections. Fiber web machines include paper and board machines, for example. As a principal rule, a vacuum system is designed in such a way that for each application, such as a vacuum roll, a vacuum device of its own is dimensioned and provided. On the other hand, two applications can be connected to one vacuum device or two vacuum devices can be connected to one application.

A vacuum system for a fiber web machine thus includes several vacuum devices 10 each of which is provided with a motor 11. In Figure 1, the number of vacuum devices 10 is four and only the principle of the motors 11 is shown. Conventionally, liquid ring pumps have been used as vacuum devices; however, blowers or even turbines have also been harnessed for generating a vacuum. A vacuum system also includes negative pressure lines 12 for leading a vacuum from the vacuum devices 10 to the applications. In Figure 1, the first negative pressure line 12 from left leads from the vacuum device 10, firstly to the center-most chamber of a pick-up roll 13, and secondly to the inside of a transfer suction roll 14. The following negative pressure line 12 leads to the first and second chambers of the pick-up roll 13. The third negative pressure line 12 leads to the felt suction boxes 17 and 18 of the second press felt 15 and the third press felt 16. The fourth negative pressure line 12 leads to the felt suction boxes 20 of the first press felt 19.

In the embodiment of Figure 1, all vacuum devices 10 may be different or at least of a different size depending on the application. In any event; a vacuum is created in the negative pressure line by means of a vacuum device. If necessary, in practice very commonly, the air volume is adjusted by supplying vacuum release air with a compensation air valve 21 to the suction side of the vacuum device 10. This adjustment is very limited and causes a great energy loss.

According to the invention, the vacuum devices 10 are adapted to maintain constant pressure in the initial part of the negative pressure lines 12. In other words, the vacuum devices are connected to each other in one way or another, which brings more possibilities to the adjustment of the vacuum system. In addition, the rotation speed of at least one motor 11' is adapted to be variable. Thus it is possible to immediately avoid using vacuum release air, which further increases the efficiency of the vacuum system. Moreover, the control devices 22 included in the motors 11 and 11' are connected to each other for adjusting the capacity of the vacuum system. On the whole, the vacuum system proposed provides surprising adjustability with high efficiency.

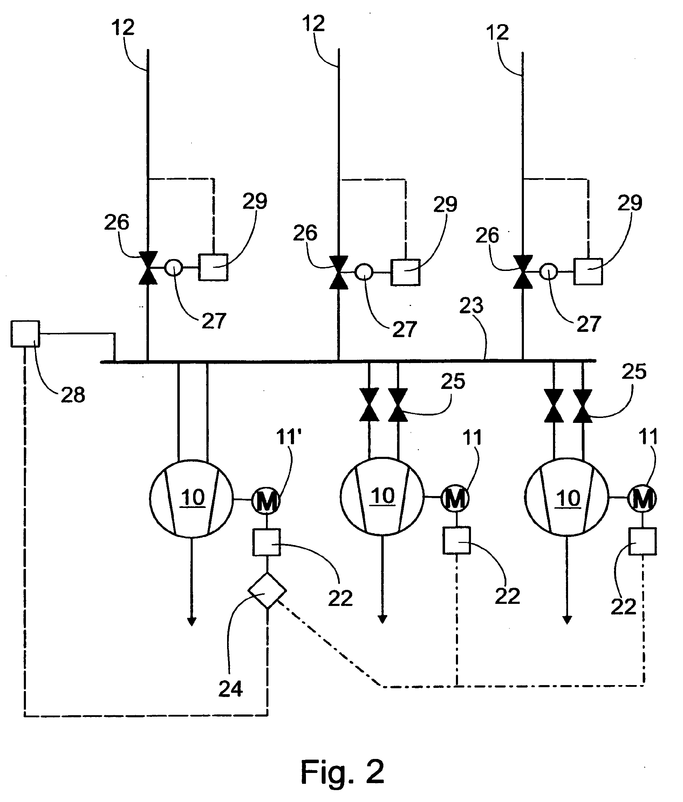

Figure 2 shows the principle of the vacuum system according to the invention with three vacuum devices 10. Firstly, for creating constant pressure, the negative pressure lines 12 have a common manifold 23 which is connected to the vacuum devices 10. In practice, the suction sides of all vacuum devices are connected to the manifold 23, the design of which can vary in different embodiments. The vacuum need of the applications can vary with changing operating parameters, for example, or due to a press felt change. Now it is possible to adjust the capacity of the vacuum system without vacuum release air because the rotation speed of at least one motor is varied as the vacuum requirement decreases. Various solutions exist for varying the rotation speed but advantageously the speed is varied by controlling the motor with a frequency converter 24. The frequency converter is small in size and a wide range of rotation speed is achieved with it. In addition, a frequency converter can be controlled in a versatile manner.

One frequency converter can control several electric motors when the frequency converter and the electric motors are dimensioned according to the intended use. The starting current of an electric motor is inherently higher than the rated current, which is taken into account when dimensioning the frequency converter in order to avoid overcurrent releases of the frequency converter. It is true, however, that present frequency converters can resist an overload of as high as 200% for several seconds. When controlling one electric motor, it is possible to use the computational electric motor over-temperature protection of the frequency converter. When controlling several electric motors, each electric motor is provided with a motor safety switch of its own, such as a thermal relay. The electric motor itself does not limit the power obtained from it but when overloaded, it heats up, which damages the electric motor. With a motor safety switch, overloading and damage caused by it can be avoided.

In practice, a reduction of several tens of percentages has been noted in the vacuum requirement. For example, in a system of three vacuum devices, regulation of only one motor may be insufficient. Therefore, according to the invention, the control devices of the motors are connected to each other and the motors are used dependent on each other. In practice, one or more vacuum devices can even be switched off, which opens a completely new adjustment window. In the application example proposed, even two vacuum devices can be stopped, whereby a three-stage adjustment is achieved as a whole. According to Figure 2, a shut-off valve 25 is arranged between the vacuum device 10 provided with a non-variable- speed motor 11 and the manifold 23. Thus, when the vacuum device is stopped, vacuum escape is prevented via the vacuum device.

With the design set forth above, the capacity of the vacuum devices can be adapted to suit each specific requirement. The final requirement is composed of the vacuum level and air volume demanded by each application. Deviating from prior art, instead of vacuum release air, the air volume is adjusted with minor contraction, wherein the control valve is in its best control range. For this, the negative pressure line 12 includes, prior to each application, a control valve 26 arranged in the negative pressure line 12. Particularly when dimensioning a new vacuum system, the new adjustment need is taken into account when selecting the control valve. In other words, the control valve is so selected that known flow properties are maintained in the flow area. The control valve 26 additionally includes pressure measurement 27 and computation means 29 connected thereto. Thus the control valve can be set in such a position that the vacuum level set for the application is achieved. In addition, the pressure measurement 28 of the manifold 23 is connected to the frequency converter 24 for controlling the relative motor 11' and for maintaining constant pressure corresponding to each vacuum requirement. Thus in practice, negative pressure of the manifold is adjusted according to the largest consumer and the vacuum system tries to maintain this pressure at a constant value. Then the control valve of this application is completely open and correspondingly, the flow for the applications requiring a lower vacuum than this is restricted for achieving the pre-set vacuum level. In practice, the term 'vacuum' refers to negative pressure or suction in the vacuum system or at an application. In Figure 2, the control devices 22 of the two other motors 11 are additionally connected to the frequency converter 24 which then can control the two other motors. Deviating from what is proposed, a separate control unit can be used which is connected to the components of the vacuum system. Particularly in a fiber web machine, the control can also be incorporated to a control system.

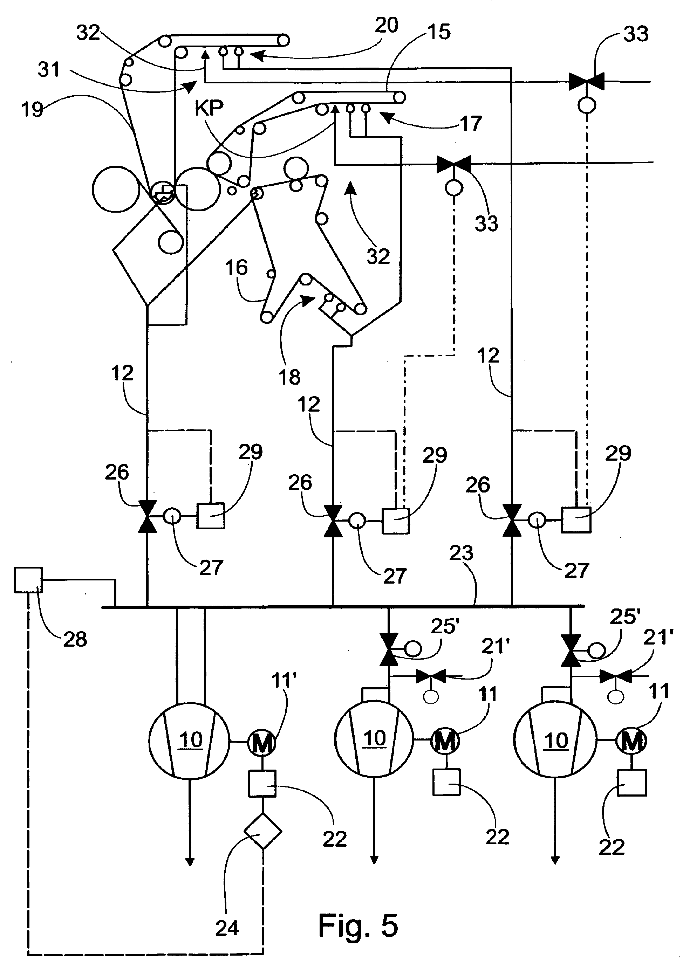

The embodiment of Figure 2 could be modified in such a way that the frequency converter 24 would control only one motor 11' and the other motors would have a mere on/off switch 22. Switching off the motor and thus stopping the vacuum device would be advantageous mainly during web breaks, whereby fluctuation of the negative pressure of the system would not harm the production. The embodiment of Figure 2 could be further modified by adapting an automatic valve 25' and a vacuum release valve 21' between the vacuum device 10 provided with an on/off switch 22 and the manifold (Figure 5). In this case, while closing the automatic valve leading to the manifold, the vacuum release valve would be opened until the vacuum device is disconnected from the suction line, whereupon it could be closed during operation without major fluctuations in the negative pressure of the system. Then, each valve 25 of Figure 2 would thus be replaced with one automatic valve 25' and one vacuum release valve 21' by locating the vacuum release valve between the vacuum device 10 and the automatic valve 25' (Figure 5). Thus the motor could be switched off without causing disturbances to the system. In a corresponding way, the motor could be switched on without disturbing the production.

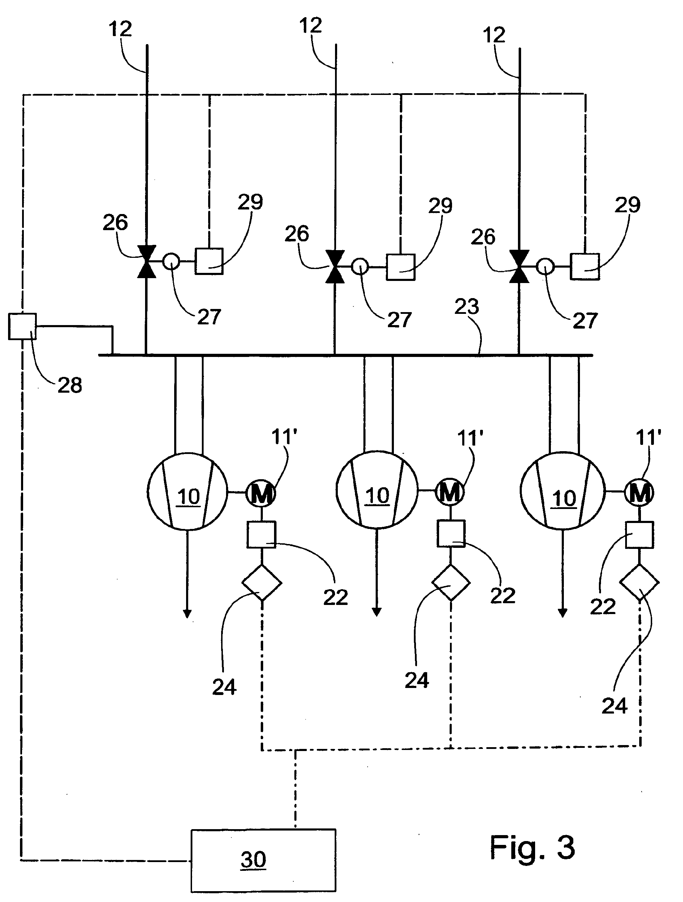

The vacuum system shown in Figure 3 differs from Figure 2 firstly based on the motor control. Here all motors 11' have a frequency converter 24 connected to the control system 30. In this case the motors 11' are driven dependent on each other for adjusting the capacity of the vacuum system. Additionally, the pressure measurement 27 of the control valve 26 is here connected to the pressure measurement 28 arranged for constant pressure. Even the mere pressure information is important, but according to the invention, the computation means 29 of the pressure measurement 27 are adapted for determining the air volume at the application. Thus the air volume of a multiphase flow can be determined with simple measurements. For clarity, water separation means, which form a part of negative pressure lines, are not shown in the figures. Water separation means are used to separate air and water from a mixture of air and water. Thus, in Figure 3, the computation means 29 of the control valves 26 are connected to the pressure measurement 28 of the manifold 23, which is illustrated with an above-located broken line.

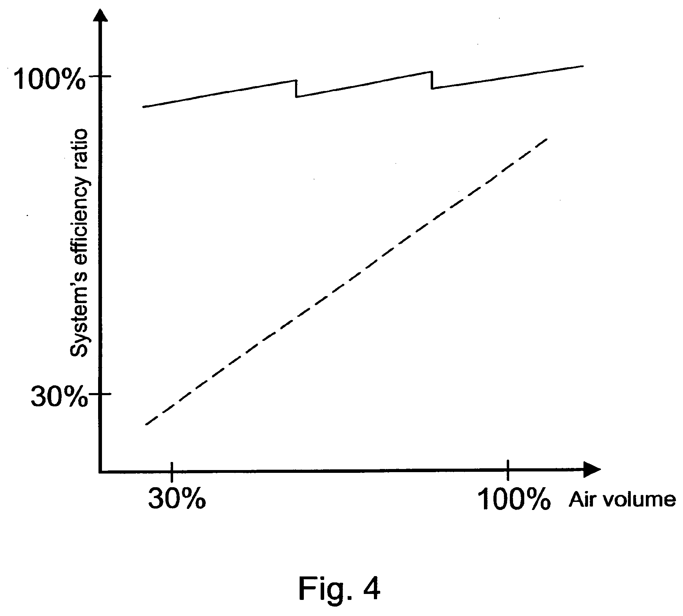

Figure 4 illustrates the efficiency of a vacuum system according to prior art and the vacuum system according to the invention as a function of the air volume. Mainly due to non-uniform dimensioning and adjustment and particularly due to the use of vacuum release air, the efficiency of known technique is the lower, the further away one is from the maximum dimensioning. The graph of known technique is represented by a broken line. Instead, the vacuum system according to the invention adapts to the changes in the vacuum requirement while the efficiency still remains high. The continuous graph of Figure 4 represents an embodiment consisting of three vacuum devices. Thus, when starting or stopping the motors, hysteresis occurs which causes momentary weakening of efficiency. In case all motors were provided with rotation speed control, hysteresis would decrease and the efficiency would simultaneously remain uniformly high. At the same time, the rotation speed of each motor could be kept within an optimum range. When forming a vacuum system, it is possible to utilize piping, motors and motor control connections of existing equipment, by merely making them conformable with the invention. Thus it is only necessary to deliver new parts and the existing components can be greatly utilized, which reduces purchase costs.

A vacuum system is proposed above which adapts to changes in the vacuum requirement. In addition, the actual air volume at the application can be determined with simple measurements. For example, by knowing the geometry of the control valves in combination with the differential pressure measurement, the computational air volume is achieved. Calibration of the computational air volume thus obtained in the actual operating environment case-specifically gives the actual air volume. According to the invention, the differential pressure is measured between an individual application and constant pressure. This gives the above mentioned air volume. Advantageously, the air volume at the application is monitored and the change in the air volume is used for the condition monitoring of the application. Thus it is possible to monitor the operation of the application and possibly detect problem conditions. Furthermore, in a press felt application, for example, it is possible to computationally determine the air permeability of a press felt. This information can be used for a comparison between different press felts, for example. Further, it is possible to monitor changes in the air permeability of a press felt, which information can be used for predicting a felt change, for example. A vacuum system can also be provided by upgrading existing negative pressure lines and changing vacuum controllers together with the motor control. On the whole, the actions required are small compared to the achieved benefit. For example, with the present fiber web machines with a wire width of over ten meters, a saving of even 500 kW can be easily achieved directly as a reduced electricity consumption of motors.

The method according to the invention can be used for the condition monitoring of the application. Furthermore, the method can be used for influencing the condition of the application. According to the invention, actions influencing the condition of the application are controlled based on the change in the air volume of the application. In the embodiment of Figure 5, the application is composed of felt suction boxes 17, 18, and 20, included in the fiber web machine, wherein the reconditioning equipment 31 adapted in the vicinity of these suction boxes are controlled based on the permeability, determined based on said change in air volume, of the press felt 15, 16, 19 included in the fiber web machine. In the embodiment proposed, as the reconditioning equipment 31, high-pressure cleaning devices 32 are used, the activation time and/or pressure of which is adjusted based on the permeability of the press felt 15, 16 and 19. In Figure 5, the valve 33 of the high-pressure cleaning devices is controlled by the computation means 29 of the corresponding application.

In the invention, the air volume is thus first changed into the permeability factor of the press felt, which factor can then be used to control the high-pressure showers located prior to the felt suction boxes (pressure/timing). Thus the condition of the press felt remains stable for a longer time, which also facilitates the adjustment of the vacuum system. At the same time, the condition of the press felt can be continuously adjusted whereby the condition of the press felt remains as constant as possible. In the method, the operation of on-line high-pressure showers is adjusted based on the defined permeability of the press felt. Control parameters include, for example, the continuous pressure level, the operating time, or their combination. According to the method, the permeability of the press felt can be made constant or the permeability is changed as desired by controlling the high-pressure showers of the press felt. With the method, the condition and operation of the press felt can be kept within desired limits and its premature clogging can be prevented. In this way, operation smoother than before, regardless of the press felt age, as well as a longer felt service life than earlier, are achieved.

## Claims

1. Vacuum system for a fiber web machine, the vacuum system including
- several vacuum devices (10) each of which is provided with a motor (11, 11'), and
- negative pressure lines (12) for leading a vacuum from the vacuum devices (10) to applications,
wherein the rotation speed of at least one motor (11') is adapted to be variable,
**characterized in that** the vacuum devices (10) are adapted to maintain constant pressure in an initial part of the negative pressure lines (12) between a control valve (26) arranged in the negative pressure line (12) prior to each application and the vacuum devices (10), wherein for providing constant pressure, the negative pressure lines (12) have a common manifold (23) which is connected to the vacuum devices (10), and control devices (22) included in the motors (11, 11') are connected to each other for adjusting the capacity of the vacuum system.

2. Vacuum system according to claim 1, **characterized in that** said variable motor (11') is provided with a frequency converter (24).

3. Vacuum system according to claim 1 or 2, **characterized in that** a shut-off valve (25) is provided between the vacuum device (10) provided with a non-variable-speed motor (11) and the manifold (23).

4. Vacuum system according to any of claims 1 - 3, **characterized in that** the control valve (26) includes a pressure measurement (27) which is connected to a pressure measurement (28) of the manifold (23) arranged for the constant pressure.

5. Vacuum system according to claim 4, **characterized in that** the pressure measurement (27) of the control valve (26) has computation means (29) incorporated thereto for determining the air volume at the application.

6. Method in the vacuum system of a fiber web machine for the condition monitoring of an application in which method negative pressure is generated with several vacuum devices (10) each of which is driven with a motor (11, 11'), and the vacuum generated is supplied with negative pressure lines (12) from the vacuum devices (10) to applications, wherein the rotation speed of at least one motor (11') is adapted to be variable, **characterized in that** for providing constant pressure, the negative pressure lines (12) have a common manifold (23) which is connected to the vacuum devices (10), wherein constant pressure is maintained in initial parts of the negative pressure lines (12) between a control valve (26) arranged in the negative pressure line (12) prior to each application and the vacuum devices (10) by means of the vacuum devices (10) and the motors (11, 11') are used dependent on each other for adjusting the capacity of the vacuum system.

7. Method according to claim 6, **characterized in that** differential pressure is measured between an individual application and constant pressure, and the air volume at the application is determined based on the pressure measurements, and the air volume at the application is monitored, and the change in the air volume is used for the condition monitoring of the application.

8. Method according to claim 7, **characterized in that** actions influencing the condition of the application are controlled based on the change in the air volume.

9. Method according to claim 8, **characterized in that** the application is composed of felt suction boxes (17, 18, 20) included in the fiber web machine, the reconditioning equipment (31) adapted in the vicinity of which suction boxes are controlled based on the permeability, defined based on said change in air volume, of the press felt (15, 16, 19) included in the fiber web machine.

10. Method according to claim 9, **characterized in that** as the reconditioning equipment (31) high-pressure cleaning devices (32) are used whose activation time and/or pressure is adjusted based on the permeability of the press felt (15, 16, 19).

11. Method according to any of claims 6 - 10, **characterized in that** a vacuum system according to any of claims 1 - 5 is used in the method.

## Patentansprüche

1. Vakuumsystem für eine Faserbahnmaschine, wobei das Vakuumsystem umfasst
- mehrere Vakuumvorrichtungen (10), von denen jede mit einem Motor (11, 11') versehen ist, und
- Unterdruckleitungen (12), zum Führen eines Vakuums von den Vakuumvorrichtungen (10) zu Einsatzbereichen,
wobei die Drehzahl mindestens eines Motors (11') angepasst ist, variabel zu sein,
**dadurch gekennzeichnet, dass** die Vakuumvorrichtungen (10) angepasst sind, einen konstanten Druck in einem Anfangsabschnitt der Unterdruckleitungen (12) zwischen einem Steuerventil (26), das in der Unterdruckleitung (12) vor jedem Einsatzbereich angeordnet ist, und den Vakuumvorrichtungen aufrechtzuerhalten, wobei die Unterdruckleitungen (12) zum Liefern konstanten Drucks eine gemeinsame Sammelleitung (23) haben, die mit den Vakuumvorrichtungen (10) verbunden ist, und wobei in den Motoren (11, 11') enthaltene Steuerungsvorrichtungen (22) zum Einstellen der Kapazität des Vakuumsystems miteinander verbunden sind.

2. Vakuumsystem nach Anspruch 1, **dadurch gekennzeichnet, dass** der variable Motor (11') mit einem Frequenzwandler (24) versehen ist.

3. Vakuumsystem nach Anspruch 1 oder 2, **dadurch gekennzeichnet, dass** ein Absperrventil (25) zwischen der mit einem Motor (11) mit konstanter Drehzahl versehenen Vakuumvorrichtung (10) und der Sammelleitung (23) vorgesehen ist.

4. Vakuumsystem nach einem der Ansprüche 1 bis 3, **dadurch gekennzeichnet, dass** das Steuerventil (26) einen Druckmesser (27) umfasst, der mit einem Druckmesser (28) der Sammelleitung (23) verbunden ist, der für den konstanten Druck angeordnet ist.

5. Vakuumsystem nach Anspruch 4, **dadurch gekennzeichnet, dass** der Druckmesser (27) des Steuerventils (26) eine in diesen aufgenommene Recheneinrichtung (29) zum Bestimmen der Luftmenge in dem Einsatzbereich hat.

6. Verfahren in dem Vakuumsystem einer Faserbahnmaschine zum Überwachen der Bedingung eines Einsatzbereiches, wobei bei dem Verfahren ein Unterdruck mit mehreren Vakuumvorrichtungen (10) erzeugt wird, von denen jede mit einem Motor (11, 11') angetrieben wird, und wobei das erzeugte Vakuum mit Unterdruckleitungen (12) von den Vakuumvorrichtungen (10) zu Einsatzbereichen geliefert wird, wobei die Drehzahl mindestens eines Motors (11') angepasst ist, variabel zu sein, **dadurch gekennzeichnet, dass** zum Bereitstellen konstanten Drucks die Unterdruckleitungen (12) eine gemeinsame Sammelleitung (23) haben, die mit den Vakuumvorrichtungen (10) verbunden ist, wobei konstanter Druck in Anfangsabschnitten der Unterdruckleitungen (12) zwischen einem Steuerventil (26), das in der Unterdruckleitung (12) vor jedem Einsatzbereich angeordnet ist, und den Vakuumvorrichtungen (10) aufrechterhalten wird, indem die Vakuumvorrichtungen (10) und die Motoren (11, 11') zum Einstellen der Kapazität des Vakuumsystems in Abhängigkeit voneinander verwendet werden.

7. Verfahren nach Anspruch 6, **dadurch gekennzeichnet, dass** ein Differenzdruck zwischen einem einzelnen Einsatzbereich und konstantem Druck gemessen wird und die Luftmenge in dem Einsatzbereich basierend auf den Druckmessungen ermittelt wird, und die Luftmenge in den Einsatzbereichen überwacht wird, und die Änderung in der Luftmenge zum Überwachen der Bedingung des Einsatzbereiches verwendet wird.

8. Verfahren nach Anspruch 7, **dadurch gekennzeichnet, dass** Maßnahmen, die den Zustand des Einsatzbereichs beeinflussen, basierend auf der Änderung der Luftmenge gesteuert werden.

9. Verfahren nach Anspruch 8, **dadurch gekennzeichnet, dass** der Einsatzbereich aus Filzsaugkästen (17, 18, 20) besteht, die in der Faserbahnmaschine enthalten sind, wobei die Aufarbeitungsausrüstung (31), die in der Nähe der Filzsaugkästen angepasst ist, basierend auf der Durchlässigkeit des in der Faserbahnmaschine enthaltenen Pressfilzes (15, 16, 19) gesteuert wird, die basierend auf der Änderung der Luftmenge definiert wird.

10. Verfahren nach Anspruch 9, **dadurch gekennzeichnet, dass** Hochdruckreinigungsvorrichtungen (32) als die Aufarbeitungsausrüstung (31) verwendet werden, deren Aktivierungszeitpunkt und/oder Druck basierend auf der Durchlässigkeit des Pressfilzes (15, 16, 19) eingestellt wird.

11. Verfahren nach einem der Ansprüche 6 bis 10, **dadurch gekennzeichnet, dass** ein Vakuumsystem nach einem der Ansprüche 1 bis 5 in dem Verfahren verwendet wird.

## Revendications

1. Système à vide pour une machine à bande fibreuse, le système à vide comportant
- plusieurs dispositifs à vide (10) dont chacun est muni d'un moteur (11, 11'), et
- des lignes de pression négative (12) pour diriger un vide à partir des dispositifs à vide (10) vers des applications,
dans lequel la vitesse de rotation d'au moins un moteur (11') est adaptée pour être variable,
**caractérisé en ce que** les dispositifs à vide (10) sont adaptés pour maintenir une pression constante dans une partie initiale des lignes de pression négative (12) entre une soupape de commande (26) agencée dans la ligne de pression négative (12) avant chaque application et les dispositifs à vide (10), où, pour fournir une pression constante, les lignes de pression négative (12) ont un collecteur commun (23) qui est relié aux dispositifs à vide (10), et des dispositifs de commande (22) inclus dans les moteurs (11, 11') sont reliés les uns aux autres pour régler la capacité du système à vide.

2. Système à vide selon la revendication 1, **caractérisé en ce que** ledit moteur variable (11') est muni d'un convertisseur de fréquence (24).

3. Système à vide selon la revendication 1 ou 2, **caractérisé en ce qu'**une soupape d'arrêt (25) est prévue entre le dispositif à vide (10) muni d'un moteur à vitesse non variable (11) et le collecteur (23).

4. Système à vide selon l'une des revendications 1 à 3, **caractérisé en ce que** la soupape de commande (26) comporte une mesure de pression (27) qui est reliée à une mesure de pression (28) du collecteur (23) agencée pour la pression constante.

5. Système à vide selon la revendication 4, **caractérisé en ce que** la mesure de pression (27) de la soupape de commande (26) a un moyen de calcul (29) incorporé à celle-ci pour déterminer le volume d'air au niveau de l'application.

6. Procédé dans le système à vide d'une machine à bande fibreuse pour la surveillance de l'état d'une application, dans lequel procédé une pression négative est générée avec plusieurs dispositifs à vide (10) dont chacun est entraîné par un moteur (11, 11'), et le vide généré est fourni avec des lignes de pression négative (12) à partir des dispositifs à vide (10) à des applications, où la vitesse de rotation d'au moins un moteur (11') est adaptée pour être variable, **caractérisé en ce que**, pour fournir une pression constante, les lignes de pression de négative (12) ont un collecteur commun (23) qui est relié aux dispositifs à vide (10), où la pression constante est maintenue dans des parties initiales des lignes de pression négative (12) entre une soupape de commande (26) agencée dans la ligne de pression négative (12) avant chaque application et les dispositifs à vide (10) au moyen des dispositifs à vide (10) et les moteurs (11, 11') sont utilisés de manière dépendante les uns des autres pour régler la capacité du système à vide.

7. Procédé selon la revendication 6, **caractérisé en ce qu'**une pression différentielle est mesurée entre une application individuelle et une pression constante, et le volume d'air au niveau de l'application est déterminé sur la base des mesures de pression, et le volume d'air au niveau de l'application est surveillé, et le changement du volume d'air est utilisé pour la surveillance de l'état de l'application.

8. Procédé selon la revendication 7, **caractérisé en ce que** des actions influençant l'état de l'application sont commandées sur la base du changement du volume d'air.

9. Procédé selon la revendication 8, **caractérisé en ce que** l'application est composée de boîtes d'aspiration de feutre (17, 18, 20) incluses dans la machine à bande fibreuse, les équipements de remise en état (31) adaptés au voisinage desquelles boîtes d'aspiration sont commandés sur la base de la perméabilité, définie sur la base dudit changement de volume d'air, du feutre de presse (15, 16, 19) inclus dans la machine à bande fibreuse.

10. Procédé selon la revendication 9, **caractérisé en ce que**, comme étant les équipements de remise en état (31), des dispositifs de nettoyage à haute pression (32) sont utilisés dont la pression et/ou le temps d'activation est réglé(e) sur la base de la perméabilité du feutre de presse (15, 16, 19).

11. Procédé selon l'une des revendications 6 à 10, **caractérisé en ce qu'**un système à vide selon l'une des revendications 1 à 5 est utilisé dans le procédé.
